# DEMANDE DE BREVET EUROPEEN

(11) **EP 4 596 325 A1**
(43) Date de publication de la demande: **06.08.2025**
(21) Numéro de dépôt: 25152656.2
(22) Date de dépôt: 17.01.2025
(51) Int. Cl.: B60R 7/02, B60R 7/08, B60R 7/10

(54) **PANNEAU DE FERMETURE D'UN COFFRE D'UN VÉHICULE COMPORTANT UN PANNEAU D'HABILLAGE COMPRENANT UN DISPOSITIF DE RANGEMENT ET D'ACCROCHE D'UN CINTRE**

(30) Priorité: 31.01.2024 FR 2400952
(71) Demandeur: Renault s.a.s, 92100 Boulogne Billancourt (FR)
(72) Inventeur: BEZEAULT, Loic, 78280 GUYANCOURT (FR); DUCHENE, Vincent, 78280 GUYANCOURT (FR)

(57) **Abrégé**

Panneau de fermeture d'un coffre (6) de véhicule automobile, configuré pour s'ouvrir de bas en haut, comportant un panneau d'habillage intérieur (1) qui comporte au moins un dispositif de rangement et d'accroche d'un support pour vêtement (5), comportant au moins une barre (51) et un crochet de suspension (50), et ledit dispositif comprenant un élément d'accroche (20) récepteur dudit support pour vêtement (5) comportant au moins deux orifices traversants (201, 202) dudit panneau d'habillage communiquant entre eux, et au moins une barre d'accroche (203) située entre les deux orifices traversants (201, 202) et accessible depuis ladite face visible du panneau d'habillage, lesdits orifices(201, 202) et ladite barre d'accroche (203) étant configurés pour y suspendre le crochet (50) du support pour vêtement (5), et au moins une patte de maintien (21, 22) réceptrice de ladite au moins une barre (51) du support pour vêtement (5) en rangement..

## Description

L'invention concerne un panneau de fermeture d'un coffre d'un véhicule automobile, en particulier un hayon, comportant un panneau d'habillage comprenant un dispositif de rangement et d'accroche d'un support pour vêtement, notamment de type cintre, ainsi qu'un ensemble comprenant ledit panneau d'habillage et le support pour vêtement associé.

L'invention s'applique plus particulièrement aux véhicules automobiles comportant un coffre de rangement fermé par un panneau de fermeture s'ouvrant du bas vers le haut du véhicule.

De l'état de la technique antérieure dans le domaine des véhicules automobiles afin de permettre de pendre un vêtement si besoin, on connaît des dispositifs d'accroche de cintres basés sur un simple crochet dans l'habitacle du véhicule, par exemple fixé à proximité d'une poignée de maintien latérale pour un passager, fixée au pavillon, permettant d'y suspendre un cintre quelconque.

Dans d'autres cas, deux supports percés chacun d'une ouverture et fixés à l'arrière et de part et d'autre d'un appui-tête de siège permet de maintenir un cintre dédié à l'arrière de l'appui-tête, ledit cintre comportant deux extrémités filaires s'enfilant dans lesdites ouvertures.

Ces dispositifs présentent des inconvénients tels que celui d'occuper de l'espace, celui d'être mal placés dans le véhicule de sorte qu'ils peuvent gêner les occupants, notamment les passagers arrière, celui de n'être adaptés qu'aux appui-tête des sièges avant comme support, ou encore celui de réduire la vue vers l'extérieur de l'habitacle si un vêtement reste disposé sur le cintre.

Par ailleurs, on connaît des dispositifs sommaires, situés au niveau du coffre de rangement arrière du véhicule, qui sont par exemple constitués d'une simple accroche, par exemple une boucle réalisée avec une sangle fixée au hayon et à laquelle accrocher un cintre.

La demande de brevet EP0258278 décrit un râtelier solidarisé au hayon fermant le coffre de rangement d'un véhicule automobile. Ce râtelier comprend une paire d'éléments de support dont chacun est formé avec au moins une ouverture, et une ou plusieurs barres à vêtements configurées pour s'adapter à l'intérieur desdites ouvertures et être positionnées en relation espacée audit hayon. Un inconvénient d'un tel râtelier est qu'il est fait de pièces qui occupent une partie relativement importante du volume du coffre.

Outre les inconvénients cités plus haut, les dispositifs d'accroche de cintre de l'art antérieur nécessitent de prévoir le cintre à part. De plus, le rangement du cintre n'est pas prévu pour pouvoir disposer du cintre en permanence.

L'invention a pour but de résoudre les inconvénients des dispositifs de l'art antérieur, et vise à proposer un système d'accroche plus pratique et permettant un rangement pour un support de vêtement, notamment de type cintre.

A cet effet, l'invention fournit un panneau de fermeture d'un coffre de véhicule automobile, configuré pour s'ouvrir de bas en haut, comportant un panneau d'habillage intérieur présentant une face visible délimitée par des bords longitudinaux et des bords transversaux dont un bord transversal de référence proximal du bord libre du panneau de fermeture en position ouverte et un bord transversal opposé audit bord de référence, ledit panneau d'habillage comportant au moins un dispositif de rangement et d'accroche d'un support pour vêtement qui comporte au moins une barre et un crochet de suspension. Ledit dispositif comprend :
- un élément d'accroche récepteur du support pour vêtement, situé en une zone distante du bord transversal de référence du panneau d'habillage, de préférence en une zone sensiblement centrale du panneau d'habillage, comportant au moins deux orifices traversants dudit panneau d'habillage communiquant entre eux, et au moins une barre d'accroche située entre les deux orifices traversants et accessible depuis ladite face visible du panneau d'habillage, lesdits orifices et ladite barre d'accroche étant configurés pour y suspendre le crochet du support pour vêtement, et
- au moins une patte de maintien réceptrice de ladite au moins une barre du support pour vêtement en rangement, située sur la face visible dudit panneau d'habillage, et de préférence positionnée longitudinalement entre ledit élément d'accroche et le bord transversal opposé au bord transversal de référence du panneau d'habillage.

De préférence, ledit dispositif de rangement et d'accroche comprend deux dites pattes de maintien réceptrices de ladite au moins une barre du support pour vêtement en rangement, qui sont espacées l'une de l'autre et de préférence selon une direction parallèle à la direction transversale du panneau d'habillage.

En particulier, les deux orifices traversants de l'élément d'accroche communiquant entre eux débouchent au moins dans ladite face visible du panneau d'habillage, et la barre d'accroche de l'élément d'accroche est au niveau de ou affleure à la surface de la face visible.

De préférence, le panneau de fermeture tient lieu de portière arrière d'un coffre arrière d'un véhicule.

De préférence, le panneau de fermeture est un hayon, autrement dit un panneau de fermeture se montant articulé pour fermer le coffre arrière d'un véhicule et pouvant comprendre la baie de la lunette arrière.

De préférence, ledit élément d'accroche est positionné environ au milieu du panneau d'habillage suivant la direction transversale, et est positionné à une distance du bord transversal de référence, suivant la direction longitudinale, d'au moins environ un tiers de la longueur du panneau d'habillage.

L'élément d'accroche est de préférence positionné au voisinage du centre de gravité du panneau de fermeture, en particulier d'un hayon, afin d'engendrer peu d'efforts sur les équilibreurs du panneau de fermeture, en particulier d'un hayon.

De manière préférée, ledit dispositif de rangement et d'accroche comprend en outre une patte de maintien réceptrice du crochet de suspension du support pour vêtement en rangement, située sur la face visible dudit panneau d'habillage, et de préférence positionnée longitudinalement entre ledit élément d'accroche et le bord transversal de référence du panneau d'habillage.

Le support pour vêtement en position rangement peut ainsi être retiré facilement du dispositif de rangement et d'accroche, selon un mouvement ayant une composante de direction longitudinale.

Avantageusement, ledit panneau d'habillage est un panneau monobloc. Le dispositif de rangement et d'accroche y est donc intégré.

Selon un mode préféré de réalisation de l'invention, ledit panneau d'habillage comprend en outre au moins une première et une deuxième poignées intérieures (pour faciliter le rabat du panneau de fermeture), proximales du bord transversal de référence dudit panneau d'habillage, la première poignée comprenant un premier moyen d'accroche, récepteur du crochet, comportant un trou traversant ayant une direction axiale alignée suivant une première direction, et la deuxième poignée comprenant un deuxième moyen d'accroche, récepteur du crochet, comportant deux trous traversants côte à côte et ayant des directions axiales respectives alignées suivant une deuxième direction, ladite première direction et ladite deuxième direction étant différentes. En particulier, la première et la deuxième directions sont sensiblement perpendiculaires entre elles, et plus particulièrement l'une des directions est parallèle à la direction longitudinale et l'autre direction est parallèle à la direction transversale respectivement des bords longitudinaux et transversaux du panneau d'habillage, ou autrement dit respectivement des directions longitudinale et transversale du véhicule.

De préférence, lesdites poignées ont chacune une forme creuse délimitée par une paroi comportant une ouverture débouchant au niveau du bord transversal de référence du panneau d'habillage, et lesdits premier et deuxième moyens d'accroche sont aménagés respectivement dans une partie de paroi bordant l'ouverture respective de la poignée relative audit moyen d'accroche. Avantageusement, ledit dispositif de rangement et d'accroche peut comprendre un logement de rangement récepteur dudit support pour vêtement, conformé en creux sur ladite face visible du panneau d'habillage et dans lequel ledit support pour vêtement s'installe à plat.

L'invention a aussi pour objet un ensemble comportant un panneau de fermeture de coffre tel que décrit précédemment et un support pour vêtement comportant au moins une barre et un crochet de suspension, et ledit dispositif de rangement et d'accroche étant récepteur dudit support pour vêtement tel que
- en position de rangement, la barre dudit support pour vêtement est maintenue par l'au moins une patte de maintien réceptrice de ladite barre du support pour vêtement en rangement, et/ou
- en position d'accroche, le crochet de suspension dudit support de vêtement est suspendu audit élément d'accroche.

Ledit support pour vêtement occupe soit une position de rangement soit une position d'accroche. En particulier, ledit support pour vêtement peut être maintenu par ledit dispositif de rangement et d'accroche en position de rangement à plat et suspendu par son crochet en position d'accroche.

De préférence, ledit support pour vêtement comporte au moins des moyens de blocage transversal (pour bloquer ledit support pour vêtement dans le dispositif), situés sur ladite au moins une barre dudit support pour vêtement coopérant avec l'au moins une patte de maintien réceptrice de ladite au moins une barre du support pour vêtement, en position de rangement.

En particulier, ledit dispositif de rangement et d'accroche comporte deux dites pattes de maintien, et lesdits moyens de blocage transversal sont des ergots situés sur ladite au moins une barre dudit support de vêtement, venant en appui sur le côté latéral externe respectif d'une desdites deux pattes de maintien, en position de rangement.

Avantageusement, ledit crochet de suspension du support pour vêtement comporte au moins une partie en saillie, insérée dans ladite au moins une patte de maintien réceptrice de la partie du crochet, en position de rangement. Le support pour vêtement est ainsi bien maintenu au panneau d'habillage, et ce que le panneau de fermeture, en particulier un hayon, soit ouvert ou fermé. De préférence, ledit crochet de suspension comprend une partie droite prolongée d'une partie courbe, et ladite partie en saillie est située sur ladite partie droite, en particulier sous forme d'un épaulement, et elle est de préférence proximale de la partie courbe.

De préférence, ledit support pour vêtement comporte :
- au moins une barre définissant une forme globalement triangulaire, comportant une partie de barre transversale qui est la partie de barre maintenue par l'au moins une patte de maintien réceptrice de ladite au moins une barre du support pour vêtement en rangement, et
- un crochet de suspension situé en un sommet de ladite forme globalement triangulaire.

De préférence, la barre de forme globalement triangulaire définit trois parties de barre dont deux parties de barres latérales inclinées comportant chacune une première extrémité, ces deux premières extrémités se rejoignant avec un sommet porteur de la partie droite (dite aussi tige) du crochet de suspension, et comportant chacune une deuxième extrémité opposée à la première, une partie de barre transversale reliant lesdites deux deuxièmes extrémités. La partie de barre transversale, qui est préférentiellement horizontale, est la partie de barre maintenue par l'au moins une patte de maintien réceptrice de ladite au moins une barre du support pour vêtement en rangement.

En particulier, l'au moins une patte de maintien réceptrice de ladite au moins une barre du support pour vêtement en rangement a une forme en U, la partie de barre transversale du support pour vêtement s'insérant entre les deux branches du U. De préférence, ladite au moins une barre et le crochet sont plats. Préférentiellement, ledit support pour vêtement est une pièce monobloc.

En particulier, le support pour vêtement comporte un crochet de suspension qui comporte une partie droite (ou tige) dont une extrémité est en l'un des sommets de la forme globalement triangulaire, et l'autre extrémité est prolongée par une partie courbe permettant l'accroche. La partie en saillie (en particulier sous forme d'épaulement) du crochet de suspension peut être situé en l'extrémité de la partie droite (tige) et à la base de la partie courbe.

Le nombre des pattes de maintien de la barre du support de vêtement et la présence de la patte de maintien du crochet peut dépendre de la forme incurvée ou plate de la face visible du panneau d'habillage et de la forme courbe ou droite de la barre dudit support de vêtement.

Par exemple, la face visible de l'habillage a une forme concave et la partie de barre dudit support pour vêtement opposée au crochet de suspension a une forme droite et est maintenue à force dans ladite forme concave, et de préférence ledit dispositif comprend deux pattes de maintien et qui sont réceptrices de ladite partie de barre droite du support pour vêtement, alors qu'une patte de maintien du crochet peut être un plus mais pas indispensable. Par exemple, ladite face visible de l'habillage a une forme plate et la partie de barre dudit support pour vêtement opposée au crochet a une forme courbe qui est maintenue, ledit dispositif comprend deux pattes de maintien et qui sont réceptrices de ladite partie de barre courbe du support pour vêtement.

De préférence, le panneau de fermeture est configuré pour s'ouvrir de bas en haut, et se fermer de haut en bas.

De préférence, le bord transversal de référence du panneau d'habillage quand il est un hayon, est le bord transversal arrière, la notion de « arrière » étant définie par le hayon, monté articulé sur le véhicule, en position ouverte. Le bord transversal opposé est alors dit « bord avant »

En particulier, le panneau de fermeture est un hayon qui peut comporter une baie réceptrice de la lunette arrière du véhicule, frontalement audit dispositif, au-delà dudit bord transversal opposé au bord transversal de référence. En particulier, l'élément d'accroche du dispositif pour ledit support pour vêtement, est situé en une zone proximale de la baie réceptrice de la lunette arrière du véhicule.

Plus particulièrement, ledit support pour vêtement est amovible qu'il soit en position de rangement ou en position d'accroche, il peut alors être facilement utilisé et rangé au niveau dudit dispositif de rangement et d'accroche.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue d'un ensemble comportant un support de vêtement et un panneau de fermeture d'un coffre arrière d'un véhicule automobile, comprenant un panneau d'habillage selon un mode de réalisation de l'invention, ledit panneau de fermeture étant un hayon.
[Fig. 2] est une vue en perspective d'un panneau d'habillage de hayon comportant un dispositif d'accroche et de rangement d'un support de vêtement représentés en figure 1.
[Fig. 3] est une vue agrandie et en perspective du dispositif d'accroche et de rangement de la figure 2.
[Fig. 4] est une vue de face du panneau d'habillage du hayon et du support de vêtement de type cintre rangé sur la face visible du panneau d'habillage représentés en figure 1.
[Fig. 5] est une vue du support de vêtement représenté aux figures précédentes.
[Fig. 6] représente une vue partielle arrière d'un panneau d'habillage de hayon comportant en outre des poignées aménagées selon un mode de réalisation particulier de l'invention.
[Fig. 7A] est une vue de l'une des poignées représentées en figure 6 et supportant un cintre.
[Fig. 7B] est une vue de l'autre des poignées représentées en figure 6 et supportant un cintre.
[Fig. 8] est une vue en perspective d'un repère orthonormé classique XYZ d'un véhicule automobile.

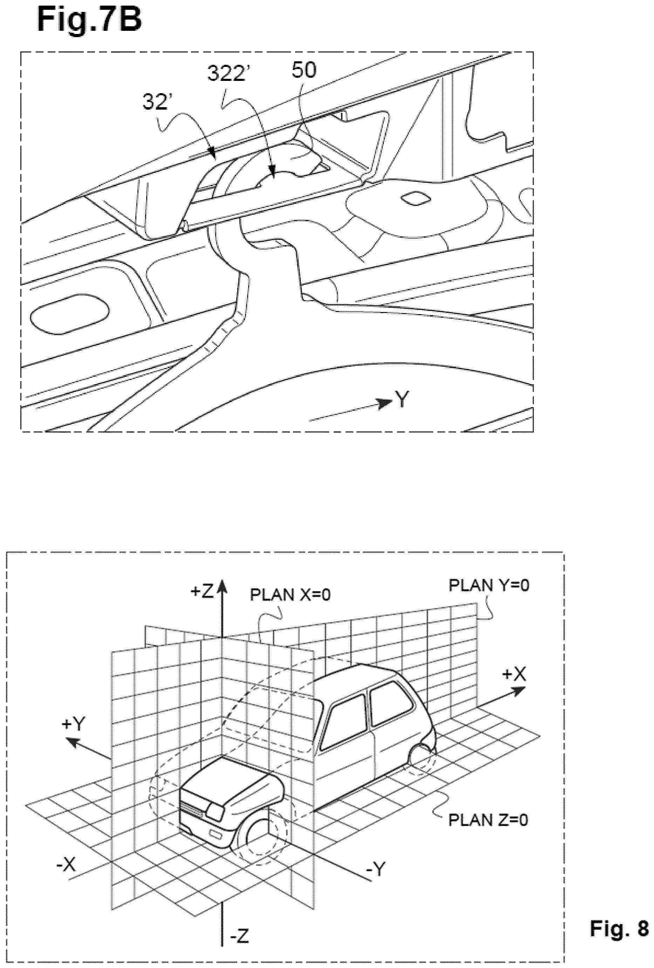

Les orientations exprimées dans la description des figures sont données en référence à un repère orthonormé XYZ d'un véhicule automobile selon la figure 8, dans lequel X représente la direction longitudinale, orientée de l'avant vers l'arrière du véhicule, Y la direction transversale orientée vers la droite du véhicule, et Z la direction verticale orientée vers le haut du véhicule en position usuelle, reposant sur ses roues.

Par simplification, les orientations du panneau de fermeture (soit du hayon selon l'exemple), du panneau d'habillage, et du dispositif d'accroche et de rangement d'un cintre, font référence à ces orientations lorsque le hayon est ouvert, relevé à l'arrière du véhicule et vers le haut du véhicule, les termes avant et arrière étant aussi indiqués en référence à l'avant et à l'arrière du véhicule automobile.

En effet, la direction longitudinale du hayon ou du panneau d'habillage, pour le hayon ainsi relevé, comporte une composante selon la direction longitudinale X du véhicule, le hayon étant plus ou moins relevé selon une composante en Z. Sur les figures, par simplification, la direction longitudinale du hayon relevé, ou du panneau d'habillage tel qu'il serait disposé sur l'intérieur du caisson du hayon relevé, est assimilée à une direction parallèle à la direction longitudinale du véhicule.

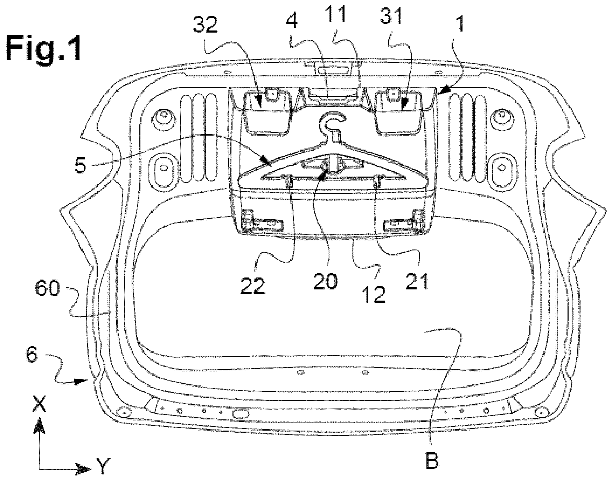

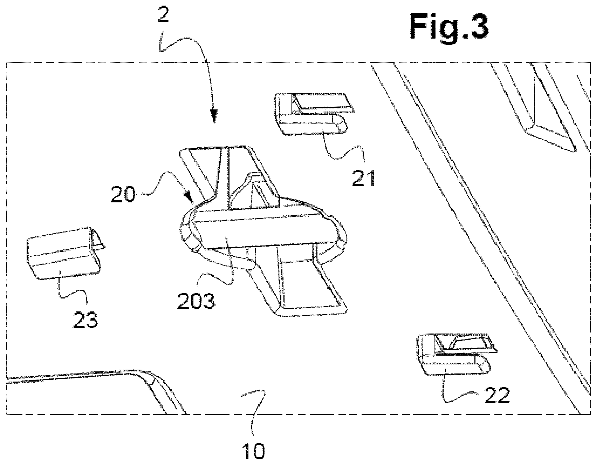

Les figures 1 à 5 sont commentées ensemble.

La figure 1 illustre le côté intérieur d'un hayon 6 comprenant un caisson 60 muni d'un panneau d'habillage 1 aménagé avec le dispositif de rangement et d'accroche qui va être décrit, le support de vêtement de type cintre 5 y étant rangé. Le caisson comprend un aménagement pour la serrure du coffre en correspondance avec la découpe 4 du panneau d'habillage, et à l'opposé, une baie B réceptrice d'une lunette arrière du véhicule. Ledit hayon tient lieu de portière arrière pour un coffre arrière d'un véhicule automobile, et est monté articulé autour d'un axe transversal pour s'ouvrir de bas vers le haut pour donner accès au coffre, et se refermer de haut en bas.

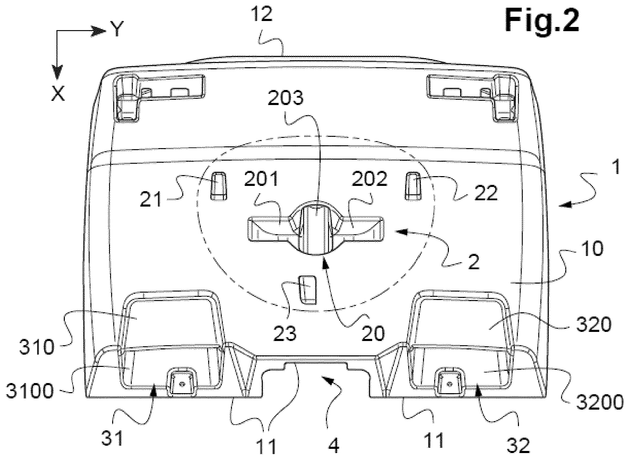

La figure 2 représente le panneau d'habillage 1, sans le cintre 5. Ce panneau d'habillage présente une face visible 10 délimitée par des bords longitudinaux et transversaux dont un bord transversal arrière 11 comprenant l'emplacement de la serrure 4 sous forme d'une découpe réceptrice de la serrure du hayon à verrouiller sur le coffre. Ledit bord transversal arrière 11 est le bord transversal de référence proximal du bord libre du hayon en position ouverte, et le bord transversal opposé 12 est dit le « bord avant » du panneau (par référence aux directions du hayon en ouverture).

Ce panneau d'habillage comprend une première et une deuxième poignées intérieures 31, 32 facilitant la prise du hayon pour rabattre le hayon ouvert, situées en une partie arrière dudit panneau d'habillage, de part et d'autre de l'emplacement de la serrure 4. Lesdites poignées ont chacune une forme creuse délimitée par une paroi 310, 320 comportant une ouverture arrière 3100, 3200, autrement dit ouverte vers le bord arrière 11 de l'habillage.

Ce panneau d'habillage 1 comporte un dispositif de rangement et d'accroche 2 pour un support pour vêtement 5.

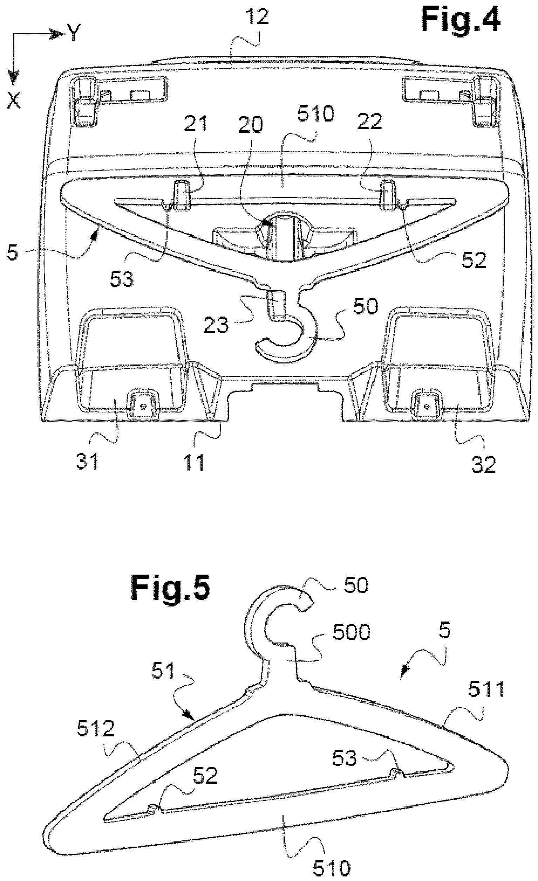

Le support pour vêtement 5 est un cintre représenté en figure 5. Il comporte une barre réceptrice d'un vêtement à suspendre, la barre étant une barre cintrée 51 suivant une forme triangulaire et un crochet de suspension 50 pour le suspendre. Ce cintre est une pièce monobloc et plate. Il est en matière plastique moulée. La barre cintrée 51 est constituée de trois parties de barre 510, 511, 512 correspondant aux trois côtés de la forme triangulaire, deux parties de barre 511 et 512 étant inclinées pour se rejoindre en un sommet du triangle où se situe le crochet 50. Le triangle comprend une partie de barre horizontale 510 en jonction entre les deux autres parties de barre 511, 512, et situé à l'opposé du sommet portant le crochet 50.

Le dispositif de rangement et d'accroche 2 comprend un élément d'accroche 20 disposé en une zone sensiblement centrale du panneau d'habillage, au voisinage du centre de gravité du hayon, pour y suspendre le cintre 5 en position d'accroche, par le crochet de suspension 50. Cet élément d'accroche comprend deux orifices 201, 202 traversants le panneau d'habillage et communiquant entre eux. Il comprend également une barre d'accroche 203 située entre les deux orifices, tel un pont, et apparente en la face visible 10 du panneau. Les deux orifices 201, 202 sont accessibles depuis la face visible 10 du panneau et sont récepteurs du crochet 50 du cintre 5, qui est alors en appui sur la face interne de la barre d'accroche 203. Le dispositif de rangement et d'accroche comprend deux pattes de maintien 21, 22 réceptrices de la barre 51 du cintre, et plus particulièrement de la partie de barre 510 qui est opposée au crochet 50. Lesdites pattes de maintien 21, 22 sont situées sur la face visible 10 dudit panneau d'habillage, à proximité de l'élément d'accroche 20. Elles sont positionnées longitudinalement entre ledit élément d'accroche 20 et le bord transversal opposé 12 au bord transversal de référence du panneau d'habillage. Elles sont en outre disposées de manière espacées l'une de l'autre selon une direction parallèle à la direction transversale du panneau d'habillage, et comme préféré, équidistantes de l'élément d'accroche 20. Elles ont chacune une forme en U, entre les branches duquel la partie de barre 510 horizontale de la barre 51 du cintre est insérée à force, les pattes de maintien présentant une certaine flexibilité.

Pour éviter un déplacement transversal du cintre 5 en position de rangement lorsque le véhicule roule, par exemple dans un virage, la barre cintrée 51 du cintre 5 comporte deux moyens de blocage transversal 52, 53 du cintre. Ces moyens de blocage sont sous forme d'ergots 52, 53 situés sur la partie de barre horizontale 510 qui est opposée au crochet 50, qui coopèrent en butée avec respectivement les pattes de maintien 21, 22 réceptrices de ladite partie de barre horizontale 510 du cintre 5 en position de rangement. Les ergots 52, 53 sont positionnés contre le côté externe de la partie transverse du U (partie reliant les branches du U) respective des pattes de maintien 21, 22, de sorte que la partie de barre 510 horizontale est bloquée de chaque côté, selon la direction transversale Y.

En outre, le dispositif de rangement et d'accroche 1 comprend une troisième patte de maintien 23, située sur la face visible 10 du panneau d'habillage 1, réceptrice de la tige, partie droite du crochet de suspension. Un épaulement 500 formant saillie sur la tige du crochet reliant la barre cintrée 51 et la partie courbe du crochet, s'insère dans cette troisième patte de maintien 23.

Cette troisième patte de maintien 23 est positionnée longitudinalement entre ledit élément d'accroche 20 et le bord transversal arrière 11 du panneau. Elle est positionnée de l'autre côté de l'élément d'accroche 20 par rapport aux première et deuxième pattes de maintien 21, 22, de manière à dessiner sensiblement un triangle avec ces deux autres pattes de maintien 21, 22 autour de l'élément d'accroche 20.

En outre, cette troisième patte 23 maintient le cintre 5 en position de rangement quand le hayon est fermé, le cintre se retrouvant alors dans une position sensiblement verticale.

L'élément d'accroche 20 est positionné au voisinage du centre de gravité du hayon afin d'engendrer peu d'efforts sur les équilibreurs du hayon. Il est positionné au plus près de la baie B, toutefois un espace peut être réservé pour le moteur de l'essuie-glace arrière, lorsqu'il y en a un.

La forme et la position de l'élément d'accroche 20 permettent de suspendre un cintre supportant au moins un vêtement, au milieu du hayon en position relevée. Le fait que l'élément d'accroche soit positionné au voisinage du centre de gravité du hayon engendre peu d'efforts sur les équilibreurs du hayon même pour un vêtement lourd et/ou si plusieurs vêtements y sont suspendus, la barre d'accroche 203 pouvant recevoir le cas échéant plusieurs cintres côte à côte. Les vêtements peuvent être suspendus à l'abri des intempéries.

Le hayon peut être fermé avec le cintre rangé autour de l'élément d'accroche, retenu par les pattes de maintien et les divers moyens de blocage.

Le cintre 5 en position rangement peut ainsi être facilement retiré du dispositif de rangement et d'accroche, selon un mouvement de direction longitudinale.

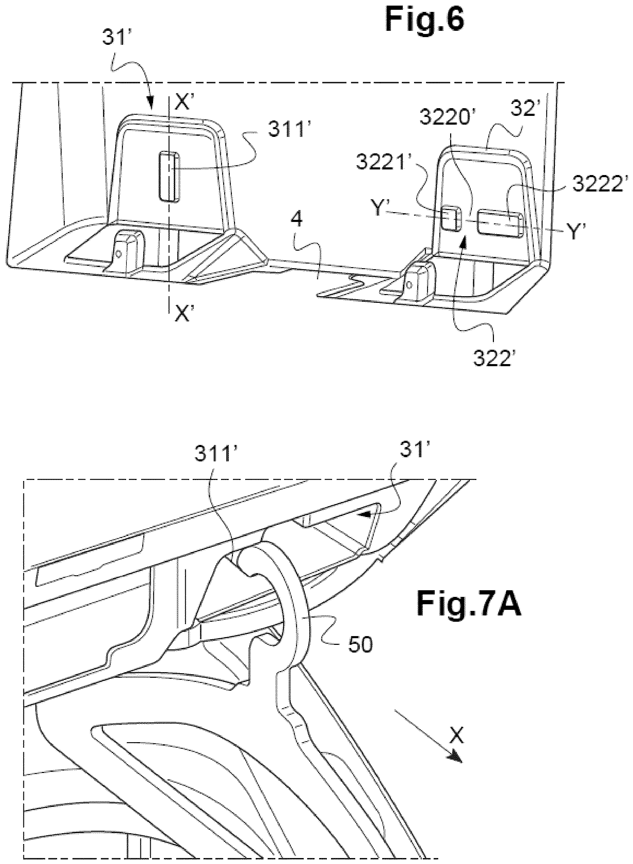

Selon un exemple non représenté sur les figures, le dispositif de rangement et d'accroche peut comprendre un logement de rangement récepteur du cintre, conformé en creux suivant la forme géométrique du cintre, autour de l'élément d'accroche, sur la face visible du panneau d'habillage, et dans lequel le cintre s'installe à plat pour ne pas être en surépaisseur de la face visible 10 du panneau. En référence aux figures 6, 7A et 7B illustrant un mode de réalisation avantageux de l'invention, le dispositif de rangement et d'accroche peut comprendre des moyens d'accroche supplémentaires situés dans les poignées intérieures 31', 32' du hayon pour y suspendre un cintre. Un premier 311' et deuxième 322' moyens d'accroche supplémentaires sont ainsi aménagés respectivement dans une partie arrière de paroi bordant l'ouverture arrière 3100', 3200' respective de la poignée relative audit moyen d'accroche.

Pour l'une des poignées 31', le moyen d'accroche 311' est un trou traversant en partie arrière de paroi, de forme sensiblement oblongue, rectangulaire selon l'exemple, dont l'orientation axiale principale X'X' est sensiblement parallèle à la direction longitudinale X, de sorte que le crochet 50 du cintre s'y insère selon cette direction, quand le hayon est relevé (Fig. 7A).

Pour l'autre des poignées 32', le moyen d'accroche 322' comprend deux trous traversants 3221', 3222', en partie arrière de paroi, disposés côte à côte séparés par une portion de paroi 3120', lesdits trous 3221', 3222', étant de même orientation axiale principale Y'Y' parallèle à la direction transversale Y, de sorte que le crochet 50 du cintre s'y insère selon cette direction, quand le hayon est relevé (Fig. 7A). L'un desdits trous 3221' est de forme sensiblement carrée et l'autre 3222' est de forme sensiblement rectangulaire.

Les vêtements peuvent ainsi être positionnés à l'extrémité du hayon, permettant par exemple de les faire sécher sans risque d'égouttage à l'intérieur du coffre. Pour éviter trop d'efforts sur les équilibreurs du hayon, ces moyens d'accroche supplémentaires sont préférentiellement utilisés pour des vêtements légers ou dans des cas exceptionnels pour égoutter un vêtement.

L'invention permet d'avoir un dispositif de rangement et d'accroche d'un cintre relativement simple mais efficace, bien intégré au panneau d'habillage du hayon. Il permet de toujours disposer d'un cintre, facile à ranger et à retirer pour l'usage, et suspendre un vêtement dans des conditions optimales pour un utilisateur. L'invention a été décrite dans le cadre d'un hayon fermant un coffre arrière mais elle pourrait s'appliquer à un véhicule ayant un coffre avant fermé par un capot, dans ce cas, le bord transversal de référence proximal du bord libre du capot en position ouverte serait le bord avant quand le capot est ouvert, au lieu du bord arrière.

## Revendications

1. Panneau de fermeture d'un coffre (6) de véhicule automobile, configuré pour s'ouvrir de bas en haut, comportant un panneau d'habillage intérieur (1) présentant une face visible (10) délimitée par des bords longitudinaux et des bords transversaux dont un bord transversal de référence (11) proximal du bord libre dudit panneau de fermeture en position ouverte et un bord transversal opposé (12) audit bord de référence, ledit panneau d'habillage comportant au moins un dispositif de rangement et d'accroche d'un support pour vêtement (5), comportant au moins une barre (51) et un crochet de suspension (50), et ledit dispositif comprenant :
- un élément d'accroche (20) récepteur dudit support pour vêtement (5), situé en une zone distante du bord transversal de référence (11) du panneau d'habillage, de préférence en une zone sensiblement centrale du panneau d'habillage, comportant au moins deux orifices traversants (201, 202) dudit panneau d'habillage communiquant entre eux, et au moins une barre d'accroche (203) située entre les deux orifices traversants (201, 202) et accessible depuis ladite face visible du panneau d'habillage, lesdits orifices(201, 202) et ladite barre d'accroche (203) étant configurés pour y suspendre le crochet (50) du support pour vêtement (5), et
- au moins une patte de maintien (21, 22) réceptrice de ladite au moins une barre (51) du support pour vêtement (5) en rangement, située sur la face visible (10) dudit panneau d'habillage, et de préférence positionnée longitudinalement entre ledit élément d'accroche (20) et le bord transversal opposé (12) au bord transversal de référence du panneau d'habillage, de préférence deux dites pattes de maintien (21, 22) qui sont espacées l'une de l'autre et de préférence selon une direction parallèle à la direction transversale du panneau d'habillage.

2. Panneau de fermeture selon la revendication 1, **caractérisé en ce que** ledit dispositif de rangement et d'accroche comprend en outre une patte de maintien (23) réceptrice du crochet de suspension (50) du support pour vêtement (5) en rangement, située sur la face visible (10) dudit panneau d'habillage (1), et de préférence positionnée longitudinalement entre ledit élément d'accroche (20) et le bord transversal de référence du panneau d'habillage (11).

3. Panneau de fermeture selon l'une quelconque des revendications 1 à 2, **caractérisé en ce que** ledit panneau d'habillage (1) est un panneau monobloc.

4. Panneau de fermeture selon l'une quelconque des revendications 1 à 3, **caractérisé en ce que** ledit panneau d'habillage comprend au moins une première et une deuxième poignées intérieures (31', 32'), proximales du bord transversal de référence (11) dudit panneau d'habillage, la première poignée (31') comprenant un premier moyen d'accroche (311') récepteur du crochet (50) comportant un trou traversant ayant une direction axiale (X'X') alignée suivant une première direction et la deuxième poignée (32') comprenant un deuxième moyen d'accroche (322') récepteur du crochet comportant deux trous traversants (3221', 3222') côte à côte et ayant des directions axiales (Y'Y') respectives alignées suivant une deuxième direction, ladite première direction et ladite deuxième direction étant différentes.

5. Hayon selon la revendication précédente 4, **caractérisé en ce que** lesdites poignées (31', 32') ont chacune une forme creuse délimitée par une paroi comportant une ouverture débouchant au niveau du bord transversal de référence (11) du panneau d'habillage, et lesdits premier (311') et deuxième (322') moyens d'accroche sont aménagés respectivement dans une partie de paroi bordant l'ouverture respective de la poignée relative audit moyen d'accroche.

6. Panneau de fermeture selon l'une quelconque des revendications 1 à 5, **caractérisé en ce que** ledit dispositif de rangement et d'accroche comprend un logement de rangement récepteur dudit support pour vêtement (5), conformé en creux sur ladite face visible (10) du panneau d'habillage et dans lequel ledit support pour vêtement s'installe à plat.

7. Ensemble comportant un panneau de fermeture de coffre selon l'une quelconque des revendications 1 à 6 et un support pour vêtement comportant au moins une barre (51) et un crochet de suspension (50), et ledit dispositif de rangement et d'accroche étant récepteur dudit support pour vêtement (5) tel qu'en position de rangement, la barre (51) dudit support pour vêtement est maintenue par l'au moins une patte de maintien (21, 22) réceptrice de ladite barre (51) du support pour vêtement (5) en rangement, et/ou qu'en position d'accroche, le crochet de suspension (50) dudit support de vêtement (5) est suspendu audit élément d'accroche (20).

8. Ensemble selon la revendication 7, **caractérisé en ce que** ledit support pour vêtement (5) comporte au moins des moyens de blocage transversal (52, 53), situés sur ladite au moins une barre (51) dudit support pour vêtement (5) coopérant avec l'au moins une patte de maintien (21, 22) réceptrice de ladite au moins une barre (51) du support pour vêtement (5), en position de rangement.

9. Ensemble selon l'une des revendications 7 à 8, **caractérisé en ce que** ledit crochet de suspension (50) du support pour vêtement comporte au moins une partie en saillie (500), insérée dans ladite au moins une patte de maintien (23) réceptrice dudit crochet de suspension en position de rangement.

10. Ensemble selon l'une des revendications 7 à 9, **caractérisé en ce que** ledit support pour vêtement (5) comporte :
- au moins une barre (51) définissant une forme globalement triangulaire, comportant une partie de barre transversale (510) qui est la partie de barre maintenue par l'au moins une patte de maintien (21, 22) réceptrice de ladite au moins une barre du support pour vêtement en rangement, et
- un crochet de suspension (50) situé en un sommet de ladite forme globalement triangulaire.
